# EUROPÄISCHE PATENTSCHRIFT

(11) **EP 3 769 988 B1**
(45) Veröffentlichungstag und Bekanntmachung des Hinweises auf die Patenterteilung: **01.06.2022**
(21) Anmeldenummer: 20182284.8
(22) Anmeldetag: 25.06.2020
(51) Int. Cl.: B60K 1/00, B60K 11/02, B60L 50/60

(54) **KÜHLKREISLAUF**
COOLING CIRCUIT
CIRCUIT DE REFROIDISSEMENT

(30) Priorität: 24.07.2019 DE 102019210967
(43) Veröffentlichungstag der Anmeldung: 27.01.2021
(73) Patentinhaber: VOLKSWAGEN AG, 38440 Wolfsburg (DE)
(72) Erfinder: Lucke, Stefan, 38446 Wolfsburg (DE); Stelzner, Robert, 38448 Wolfsburg (DE); Schulze, Tobias, 29392 Wesendorf (DE); Reuter, Ulf, 29348 Eschede (DE)

(56) Entgegenhaltungen:
- AT-A1- 512 492
- DE-A1- 4 236 124
- JP-A- 2012 244 753
- US-A1- 2017 144 532

## Beschreibung

Die Erfindung betrifft einen Kühlkreislauf für einen Antriebsstrang eines Kraftfahrzeugs, wobei der Antriebsstrang zumindest eine erste elektrische Maschine zur Bereitstellung einer ersten Antriebsleistung für eine erste Achse des Kraftfahrzeuges und zumindest eine zweite elektrische Maschine zur Bereitstellung einer zweiten Antriebsleistung für eine zweite Achse des Kraftfahrzeuges aufweist. Das Kühlkreislauf ist insbesondere zur Temperierung von (elektrischen) Komponenten eines Kraftfahrzeuges vorgesehen.

Kraftfahrzeuge weisen ein oder mehrere Kühlkreisläufe auf, in denen ein Kühlfluid durch eine oder mehrere Pumpen (jeweils) durch den Kühlkreislauf gefördert wird. Dabei wird über das Kühlfluid Wärmeenergie von den, in dem jeweiligen Kühlkreislauf integrierten Komponenten, insbesondere einer elektrischen Maschine, einem Pulswechselgleichrichter, einem Ladegerät, einem Spannungswandler, einer Batterie, aufgenommen. Diese Wärmeenergie wird anschließend über einen Umgebungswärmetauscher (einem Kühler) an die Umgebungsluft abgegeben.

Es ist bekannt, insbesondere für jede Antriebseinheit eines Kraftfahrzeugs jeweils einen eigenen Kühlkreislauf mit einer eigenen Pumpe bereitzustellen. Dabei kann die Kühlung jeder Antriebseinheit und die ihr zugeordneten Komponenten über die jeweilige Pumpe geregelt erfolgen.

Aus der EP 2 667 053 B1 ist eine Kühlanordnung für ein Kraftfahrzeug bekannt. Dabei wird über eine Pumpenanordnung eine Reibungskupplung und eine elektrische Maschine gekühlt. Die Kühlleistung kann für beide Komponenten zwischen jeweils 0% und 100% frei geregelt werden.

Es besteht ein ständiges Bedürfnis, vorhandene Kühlkreisläufe bzw. Antriebsstränge zu verbessern. Insbesondere sollen Kühlkreisläufe möglichst einfach aufgebaut und energetisch günstig zu betreiben sein.

Die AT 512 492 A1 betrifft ein elektrisches Antriebsaggregat für ein Kraftfahrzeug mit zwei flüssigkeitsgekühlten elektrischen Maschinen, die in jeweils einem Kühlmittelzweig eines gemeinsamen Kühlkreislaufs eines Kühlsystems angeordnet und parallel von Kühlmittel durchströmbar sind, wobei ein von der Pumpe geförderter Volumenstrom über ein Regelventil in einem variablen Verhältnis in einen ersten Teilvolumenstrom für einen ersten Teilbereich und in einen zweiten Teilvolumenstrom für einen zweiten Teilbereich des Kühlkreislaufs aufteilbar ist.

Aufgabe der vorliegenden Erfindung ist es, die mit Bezug auf den Stand der Technik angeführten Probleme zumindest teilweise zu lösen. Insbesondere soll ein Kühlkreislauf angegeben werden, der gerade für Kraftfahrzeuge mit Allradantrieb möglichst einfach ausgeführt ist und energetisch günstig betreibbar ist.

Zur Lösung dieser Aufgaben trägt ein Kühlkreislauf mit den Merkmalen gemäß Patentanspruch 1 bei. Vorteilhafte Weiterbildungen sind Gegenstand der abhängigen Patentansprüche. Die in den Patentansprüchen einzeln aufgeführten Merkmale sind in technologisch sinnvoller Weise miteinander kombinierbar und können durch erläuternde Sachverhalte aus der Beschreibung und/oder Details aus den Figuren ergänzt werden, wobei weitere Ausführungsvarianten der Erfindung aufgezeigt werden.

Es wird ein Kühlkreislauf für einen Antriebsstrang eines Kraftfahrzeugs vorgeschlagen, wobei der Antriebsstrang zumindest eine erste elektrische Maschine zur Bereitstellung einer ersten Antriebsleistung für eine erste Achse des Kraftfahrzeuges und zumindest eine zweite elektrische Maschine zur Bereitstellung einer zweiten Antriebsleistung für eine zweite Achse des Kraftfahrzeuges aufweist. Der Kühlkreislauf weist mindestens eine Pumpe zur Förderung eines Kühlfluids durch den Kühlkreislauf auf, wobei zumindest die erste elektrische Maschine und die zweite elektrische Maschine in zueinander parallel geschalteten Teilbereichen des Kühlkreislaufs angeordnet sind, wobei ein von der mindestens einen Pumpe geförderter Volumenstrom über mindestens eine Drossel in einem vorbestimmten Verhältnis in einen ersten Teilvolumenstrom für einen ersten Teilbereich und in einen zweiten Teilvolumenstrom für einen zweiten Teilbereich des Kühlkreislaufs aufgeteilt ist.

Insbesondere ist der Kühlkreislauf für einen Antriebsstrang vorgesehen, durch den ein Allradantrieb realisierbar ist. Insbesondere sind die elektrischen Maschinen jeweils (nur) einer Achse zugeordnet.

Insbesondere ist vorgesehen, dass zumindest eine elektrische Maschine nur bedarfsweise betrieben wird. Damit ist insbesondere ein zuschaltbarer Allradantrieb realisiert.

Der Kühlkreislauf kann eine oder mehrere Pumpen aufweisen, die zur Darstellung unterschiedlich großer Volumenströme jeweils allein oder gemeinsam betreibbar sein können. Allerdings erzeugt die mindestens eine Pumpe nur einen (gemeinsamen) Volumenstrom, der durch den Kühlkreislauf gefördert werden kann.

Erfindungsgemäß wird der Volumenstrom stromabwärts der mindestens einen Pumpe aufgeteilt in einen ersten Teilbereich und in einen zweiten Teilbereich, die zueinander parallel verschaltet sind. Stromabwärts der Teilbereiche werden die Teilvolumenströme der Teilbereiche wieder zusammengeführt. Insbesondere kann durch den dann gemeinsamen Volumenstrom ein Kühler (ein Umgebungswärmetauscher) beaufschlagt werden, so dass die aufgenommene Wärmeenergie an eine Umgebung abgeführt werden kann.

Insbesondere ist für den (Gesamt-)Volumenstrom ein Bypass zur Umgehung des Kühlers vorgesehen, so dass z. B. nach Inbetriebnahme eines Kühlkreislaufs schneller eine bevorzugte Betriebstemperatur des Kühlfluids erreicht werden kann. Die Umleitung des Kühlfluids hin zum Kühler oder hin zum Bypass kann über ein Ventil (z. B. ein 2-Wege-Ventil) erfolgen. Insbesondere kann eine Batterie (ein zur elektrischen Versorgung zumindest beider elektrischer Maschinen vorgesehener Stromspeicher) durch den Volumenstrom beaufschlagt werden. Insbesondere kann die Batterie durch einen eigenen Teilkühlkreislauf (z. B. mit eigener Pumpe) zumindest zeitweise mit dem Kühlfluid beaufschlagt werden, um auch die Batterie schneller auf eine bevorzugte Betriebstemperatur zu erwärmen bzw. zu temperieren.

Insbesondere ist ein Ausgleichbehälter an den Kühlkreislauf angeschlossen. Der Ausgleichbehälter stellt sicher, dass ausreichend Kühlfluid in dem Kühlkreislauf vorhanden ist. Weiter kann über den Ausgleichbehälter eine Ausdehnung des Kühlfluids über eine Luftvorlage kompensiert werden.

Erfindungsgemäß ist ein von der mindestens einen Pumpe geförderter Volumenstrom über mindestens eine Drossel in einem vorbestimmten Verhältnis in einen ersten Teilvolumenstrom für einen ersten Teilbereich und in einen zweiten Teilvolumenstrom für einen zweiten Teilbereich des Kühlkreislaufs aufgeteilt.

Eine Drossel ist eine insbesondere konstant vorliegende Querschnittsverengung eines Strömungsquerschnitts (hier der Strömungsquerschnitt zumindest eines der Teilbereiche). Mit der Drossel kann ein Verhältnis zwischen dem ersten Teilvolumenstrom und dem zweiten Teilvolumenstrom (fest) eingestellt werden.

Insbesondere ist die mindestens eine Drossel in dem zweiten Teilbereich angeordnet, so dass der den zweiten Teilbereich beaufschlagende zweite Teilvolumenstrom (immer) kleiner ist als der erste Teilvolumenstrom.

Insbesondere ist der zweite Teilbereich der elektrischen Maschine zugeordnet, die nur bedarfsweise (z. B. wenn ein Allradantrieb bereitgestellt werden soll) zum Antrieb des Kraftfahrzeugs genutzt wird. Der zweite Teilbereich wird daher nur bedarfsweise mit einem zweiten Teilvolumenstrom beaufschlagt. Insbesondere liegt aber im Betrieb des Antriebsstrangs ständig ein zweiter Teilvolumenstrom vor, da ein dieser elektrischen Maschine zugeordneter Pulswechselrichter immer eine Wärmeabfuhr benötigt.

Insbesondere erfolgt ein Antrieb des Kraftfahrzeugs über die erste Antriebsleistung, wobei die zweite Antriebsleistung nur im Bedarfsfall zusätzlich zur ersten Antriebsleistung bereitstellbar ist.

Insbesondere sind im zweiten Teilbereich ausschließlich Komponenten (z. B. nur ein Pulswechselrichter - PWR) angeordnet, die zum Betrieb der zweiten elektrischen Maschine erforderlich sind.

Insbesondere ist in jedem Teilbereich ein Pulswechselrichter angeordnet.

Insbesondere ist der Pulswechselrichter in zumindest einem der Teilbereiche (bevorzugt in beiden Teilbereichen) stromaufwärts der in dem Teilbereich angeordneten elektrischen Maschine angeordnet.

Insbesondere sind in dem ersten Teilbereich oder in dem von dem (Gesamt-)Volumenstrom durchströmten Bereich des Kühlkreislaufs weitere Komponenten des Antriebsstrangs angeordnet (z. B. ein Ladegerät und/oder ein Spannungswandler).

Es wird weiter ein Kraftfahrzeug vorgeschlagen, zumindest aufweisend einen Antriebsstrang. Der Antriebsstrang umfasst zumindest eine erste elektrische Maschine zur Bereitstellung einer ersten Antriebsleistung für eine erste Achse (mit Rädern) des Kraftfahrzeuges und zumindest eine zweite elektrische Maschine zur Bereitstellung einer zweiten Antriebsleistung für eine zweite Achse (mit Rädern) des Kraftfahrzeuges. Beide elektrischen Maschinen sind in dem beanspruchten , Kühlkreislauf angeordnet.

Die Ausführungen zu dem Kühlkreislauf sind insbesondere auf das Kraftfahrzeug übertragbar und umgekehrt.

Die Verwendung unbestimmter Artikel ("ein", "eine", "einer" und "eines"), insbesondere in den Patentansprüchen und der diese wiedergebenden Beschreibung, ist als solche und nicht als Zahlwort zu verstehen. Entsprechend damit eingeführte Begriffe bzw. Komponenten sind somit so zu verstehen, dass diese mindestens einmal vorhanden sind und insbesondere aber auch mehrfach vorhanden sein können.

Vorsorglich sei auch angemerkt, dass die hier verwendeten Zahlwörter ("erste", "zweite", ...) vorrangig (nur) zur Unterscheidung von mehreren gleichartigen Gegenständen, Größen oder Prozessen dienen, also insbesondere keine Abhängigkeit und/oder Reihenfolge dieser Gegenstände, Größen oder Prozesse zueinander zwingend vorgeben. Sollte eine Abhängigkeit und/oder Reihenfolge erforderlich sein, ist dies hier explizit angegeben oder es ergibt sich offensichtlich für den Fachmann beim Studium der konkret beschriebenen Ausgestaltung. Soweit ein Bauteil mehrfach vorkommen kann ("mindestens ein"), kann die Beschreibung zu einem dieser Bauteile für alle oder ein Teil der Mehrzahl dieser Bauteile gleichermaßen gelten, dies ist aber nicht zwingend.

Die Erfindung sowie das technische Umfeld werden nachfolgend anhand der beiliegenden Figuren näher erläutert. Es ist darauf hinzuweisen, dass die Erfindung durch die angeführten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung zu kombinieren, im Rahmen der in den Ansprüche beanspruchten Erfindung.

Insbesondere ist darauf hinzuweisen, dass die Figuren und insbesondere die dargestellten Größenverhältnisse nur schematisch sind. Es zeigen:
Fig. 1: ein Kraftfahrzeug mit einem Antriebsstrang und einer ersten, erfindungsgemäßen Ausführungsvariante eines Kühlkreislaufs; und
Fig. 2: eine zweite Ausführungsvariante eines nicht erfindugsgemäßen Kühlkreislaufs.

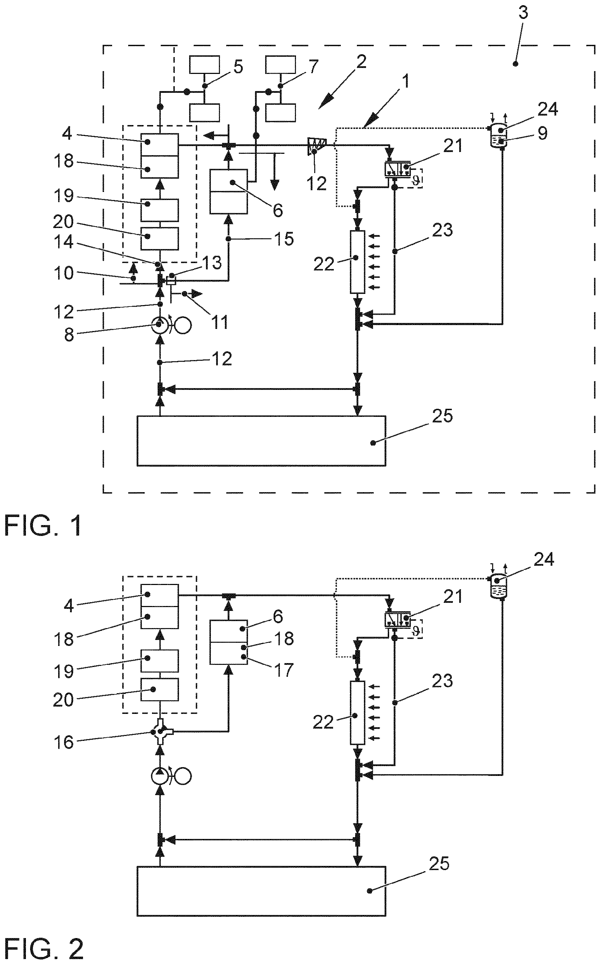

Die Fig. 1 zeigt ein Kraftfahrzeug 3 mit einem Antriebsstrang 2 und einer ersten Ausführungsvariante eines Kühlkreislaufs 1. Der Antriebsstrang 2 umfasst eine erste elektrische Maschine 4 zur Bereitstellung einer ersten Antriebsleistung für eine erste Achse 5 mit Rädern des Kraftfahrzeuges 3 und eine zweite elektrische Maschine 6 zur Bereitstellung einer zweiten Antriebsleistung für eine zweite Achse 7 mit Rädern des Kraftfahrzeuges 3. Beide elektrischen Maschinen 4, 6 sind in einem Kühlkreislauf 1 angeordnet bzw. werden durch den einen Kühlkreislauf 1 mit Kühlfluid 9 beaufschlagt.

Der Kühlkreislauf 1 weist eine Pumpe 8 zur Förderung eines Kühlfluids 9 durch den Kühlkreislauf 1 auf, wobei zumindest die erste elektrische Maschine 4 und die zweite elektrische Maschine 6 in zueinander parallel geschalteten Teilbereichen 10, 11 des Kühlkreislaufs 1 angeordnet sind.

Der Kühlkreislauf 1 ist für einen Antriebsstrang 2 vorgesehen, durch den ein Allradantrieb realisierbar ist. Die elektrischen Maschinen 4, 6 sind jeweils nur einer Achse 4, 6 zugeordnet, können also jeweils nur dieser einen Achse die erzeugte Antriebsleistung zur Verfügung stellen.

Der von der Pumpe 8 erzeugte Volumenstrom 12 wird stromabwärts der Pumpe 8 aufgeteilt in einen ersten Teilbereich 10 und in einen zweiten Teilbereich 11, die zueinander parallel verschaltet sind. Stromabwärts der Teilbereiche 10, 11 werden die Teilvolumenströme 14, 15 der Teilbereiche 10, 11 wieder zusammengeführt. Durch den dann gemeinsamen Volumenstrom 12 wird ein Kühler 22 (ein Umgebungswärmetauscher) beaufschlagt, so dass die aufgenommene Wärmeenergie an eine Umgebung abgeführt werden kann.

Für den (Gesamt-)Volumenstrom 12 ist ein Bypass 23 zur Umgehung des Kühlers 22 vorgesehen, so dass z. B. nach Inbetriebnahme eines Kühlkreislaufs 1 schneller eine bevorzugte Betriebstemperatur des Kühlfluids 9 erreicht werden kann. Die Umleitung des Kühlfluids 9 hin zum Kühler 22 oder hin zum Bypass 23 erfolgt über ein Ventil 21 (z. B. ein 2/3-Wege-Ventil; mit zwei Schaltstellungen und drei Anschlüssen).

Eine Batterie 25 kann durch den Volumenstrom 12 beaufschlagt werden.

Weiter ist ein Ausgleichbehälter 24 an den Kühlkreislauf 1 angeschlossen. Der Ausgleichbehälter 24 stellt sicher, dass ausreichend Kühlfluid 9 in dem Kühlkreislauf 1 vorhanden ist. Weiter kann über den Ausgleichbehälter 24 eine Ausdehnung des Kühlfluids 9 über eine Luftvorlage kompensiert werden.

Der von der Pumpe 8 geförderte Volumenstrom 12 kann über eine Drossel 13 in einem vorbestimmten Verhältnis in einen ersten Teilvolumenstrom 14 für einen ersten Teilbereich 10 und in einen zweiten Teilvolumenstrom 15 für einen zweiten Teilbereich 11 des Kühlkreislaufs 1 aufgeteilt werden.

Die Drossel 13 ist in dem zweiten Teilbereich 11 angeordnet, so dass der den zweiten Teilbereich 11 beaufschlagende zweite Teilvolumenstrom 15 (immer) kleiner ist als der erste Teilvolumenstrom14.

Der zweite Teilbereich 11 ist der zweiten elektrischen Maschine 6 zugeordnet, die nur bedarfsweise (z. B. wenn ein Allradantrieb bereitgestellt werden soll) zugeschaltet wird.

Es erfolgt ein Antrieb des Kraftfahrzeugs 3 über die erste Antriebsleistung, wobei die zweite Antriebsleistung nur im Bedarfsfall zusätzlich zur ersten Antriebsleistung bereitstellbar ist.

Im zweiten Teilbereich 11 sind ausschließlich Komponenten 17 (z. B. nur ein Pulswechselrichter 18 - PWR) angeordnet, die zum Betrieb der zweiten elektrischen Maschine 6 erforderlich sind. Die Pulswechselrichter 18 sind in beiden Teilbereichen jeweils stromaufwärts der in dem Teilbereich 10, 11 angeordneten elektrischen Maschine 4, 6 angeordnet. Damit kann der Pulswechselrichter 18 jeweils mit einem kühleren Kühlfluid 9 beaufschlagt werden als die elektrischen Maschinen 4, 6.

In dem ersten Teilbereich 10 sind weitere Komponenten 17 des Antriebsstrangs 2 angeordnet (hier entlang der Strömungsrichtung des Kühlfluids 9 z. B. ein Spannungswandler 20 und dann ein Ladegerät 19).

Fig. 2 zeigt eine zweite Ausführungsvariante eines nicht erfindungsgemäßen Kühlkreislaufs 1. Auf die Ausführungen zu Fig. 1 wird verwiesen. Im Unterschied zur ersten Ausführungsvariante weist der Kühlkreislauf 1 hier ein Regelventil 16 (anstatt der Drossel 13) auf, über das ein von der Pumpe 8 geförderter Volumenstrom 12 in einem variablen Verhältnis in einen ersten Teilvolumenstrom 14 für einen ersten Teilbereich 10 und in einen zweiten Teilvolumenstrom 15 für einen zweiten Teilbereich 11 des Kühlkreislaufs 1 aufteilbar ist.

Das Regelventil 16 kann sowohl den zweiten Teilvolumenstrom 15 als auch den ersten Teilvolumenstrom 14 auf null reduzieren. Über das Regelventil 16 kann jedes Verhältnis der Teilvolumenströme 14, 15 eingestellt werden. Insbesondere kann jeder Teilvolumenstrom 14, 15 zwischen 0% und 100% des von der Pumpe 8 geförderten Volumenstroms 12 betragen.

Hier ist das Regelventil 16 als Proportionalventil ausgeführt, wobei ein Schieber beliebig verstellbar ist.

### Bezugszeichenliste

- 1: Kühlkreislauf
- 2: Antriebsstrang
- 3: Kraftfahrzeug
- 4: erste elektrische Maschine
- 5: erste Achse
- 6: zweite elektrische Maschine
- 7: zweite Achse
- 8: Pumpe
- 9: Kühlfluid
- 10: erster Teilbereich
- 11: zweiter Teilbereich
- 12: Volumenstrom
- 13: Drossel
- 14: erster Teilvolumenstrom
- 15: zweiter Teilvolumenstrom
- 16: Regelventil
- 17: Komponente
- 18: Pulswechselrichter
- 19: Ladegerät
- 20: Spannungswandler
- 21: Ventil
- 22: Kühler
- 23: Bypass
- 24: Ausgleichbehälter
- 25: Batterie

## Patentansprüche

1. Kühlkreislauf (1) für einen Antriebsstrang (2) eines Kraftfahrzeugs (3), wobei der Antriebsstrang (2) zumindest eine erste elektrische Maschine (4) zur Bereitstellung einer ersten Antriebsleistung für eine erste Achse (5) des Kraftfahrzeuges (3) und zumindest eine zweite elektrische Maschine (6) zur Bereitstellung einer zweiten Antriebsleistung für eine zweite Achse (7) des Kraftfahrzeuges (3) aufweist; wobei der Kühlkreislauf (1) mindestens eine Pumpe (8) zur Förderung eines Kühlfluids (9) durch den Kühlkreislauf (1) aufweist, wobei zumindest die erste elektrische Maschine (4) und die zweite elektrische Maschine (6) in zueinander parallel geschalteten Teilbereichen (10, 11) des Kühlkreislaufs (1) angeordnet sind; wobei ein von der mindestens einen Pumpe (8) geförderter Volumenstrom (12) über mindestens eine Drossel (13) in einem vorbestimmten Verhältnis in einen ersten Teilvolumenstrom (14) für einen ersten Teilbereich (10) und in einen zweiten Teilvolumenstrom (15) für einen zweiten Teilbereich (11) des Kühlkreislaufs (1) aufgeteilt ist.

2. Kühlkreislauf (1) nach Patentanspruch 1, wobei die mindestens eine Drossel (13) in dem zweiten Teilbereich (11) angeordnet ist, so dass der den zweiten Teilbereich (11) beaufschlagende zweite Teilvolumenstrom (15) kleiner ist als der erste Teilvolumenstrom (14).

3. Kühlkreislauf (1) nach einem der vorhergehenden Patentansprüche, wobei ein Antrieb des Kraftfahrzeugs (3) über die erste Antriebsleistung erfolgt und die zweite Antriebsleistung nur im Bedarfsfall zusätzlich zur ersten Antriebsleistung bereitstellbar ist.

4. Kühlkreislauf (1) nach einem der vorhergehenden Patentansprüche, wobei im zweiten Teilbereich (11) ausschließlich Komponenten (17) angeordnet sind, die zum Betrieb der zweiten elektrischen Maschine (6) erforderlich sind.

5. Kühlkreislauf (1) nach einem der vorhergehenden Patentansprüche, wobei in jedem Teilbereich (10, 11) ein Pulswechselrichter (18) angeordnet ist.

6. Kühlkreislauf (1) nach Patentanspruch 5, wobei der Pulswechselrichter (18) in zumindest einem der Teilbereiche (10, 11) stromaufwärts der in dem Teilbereich (10, 11) angeordneten elektrischen Maschine (4, 6) angeordnet ist.

7. Kraftfahrzeug (3), zumindest aufweisend einen Antriebsstrang (2), wobei der Antriebsstrang (2) zumindest eine erste elektrische Maschine (4) zur Bereitstellung einer ersten Antriebsleistung für eine erste Achse (5) des Kraftfahrzeuges (3) und zumindest eine zweite elektrische Maschine (6) zur Bereitstellung einer zweiten Antriebsleistung für eine zweite Achse (7) des Kraftfahrzeuges (3) aufweist; wobei beide elektrischen Maschinen (4, 6) in einem Kühlkreislauf (1) nach einem der vorhergehenden Patentansprüche angeordnet sind.

## Claims

1. Cooling circuit (1) for a drive train (2) of a motor vehicle (3), wherein the drive train (2) has at least one first electric machine (4) for providing a first drive power for a first axle (5) of the motor vehicle (3) and at least one second electric machine (6) for providing a second drive power for a second axle (7) of the motor vehicle (3); wherein the cooling circuit (1) has at least one pump (8) for conveying a cooling fluid (9) through the cooling circuit (1), wherein at least the first electric machine (4) and the second electric machine (6) are arranged in sections (10, 11) of the cooling circuit (1) connected in parallel to each other; wherein a volume flow (12) conveyed by the at least one pump (8) is divided via at least one restrictor (13) in a prespecified ratio into a first partial volume flow (14) for a first section (10) and into a second partial volume flow (15) for a second section (11) of the cooling circuit (1).

2. Cooling circuit (1) according to Claim 1, wherein the at least one restrictor (13) is arranged in the second section (11) so that the second partial volume flow (15) being applied to the second section (11) is smaller than the first partial volume flow (14).

3. Cooling circuit (1) according to either of the preceding claims, wherein a drive of the motor vehicle (3) is effected via the first drive power, and the second drive power can be provided in addition to the first drive power only when necessary.

4. Cooling circuit (1) according to any one of the preceding claims, wherein only components (17) that are required for operating the second electric machine (6) are arranged in the second section (11).

5. Cooling circuit (1) according to any one of the preceding claims, wherein in each section (10, 11), a pulse-controlled inverter (18) is arranged.

6. Cooling circuit (1) according to Claim 5, wherein the pulse-controlled inverter (18) is arranged in at least one of the sections (10, 11) upstream of the electric machine (4, 6) arranged in the section (10, 11).

7. Motor vehicle (3), at least comprising a drive train (2), wherein the drive train (2) has at least one first electric machine (4) for providing a first drive power for a first axle (5) of the motor vehicle (3) and at least one second electric machine (6) for providing a second drive power for a second axle (7) of the motor vehicle (3); wherein both electric machines (4, 6) are arranged in a cooling circuit (1) according to any one of the preceding claims.

## Revendications

1. Circuit de refroidissement (1) pour une chaîne cinématique (2) d'un véhicule automobile (3), dans lequel la chaîne cinématique (2) présente au moins une première machine électrique (4) destinée à fournir une première puissance de propulsion pour un premier essieu (5) du véhicule automobile (3) et au moins une seconde machine électrique (6) destinée à fournir une seconde puissance de propulsion pour un second essieu (7) du véhicule automobile (3) ; le circuit de refroidissement (1) présentant au moins une pompe (8) destinée à transporter un fluide de refroidissement (9) à travers le circuit de refroidissement (1), au moins la première machine électrique (4) et la seconde machine électrique (6) étant disposées dans des zones partielles (10, 11) du circuit de refroidissement (1) couplées en parallèle les unes aux autres ; un débit volumétrique (12) transporté par l'au moins une pompe (8) étant divisé, par le biais d'au moins un réducteur de débit (13), dans une proportion prédéfinie en un premier débit volumétrique partiel (14) pour une première zone partielle (10) et un second débit volumétrique partiel (15) pour une seconde zone partielle (11) du circuit de refroidissement (1).

2. Circuit de refroidissement (1) selon la revendication 1, dans lequel l'au moins un réducteur de débit (13) est disposé dans la seconde zone partielle (11), de telle sorte que le second débit volumétrique partiel (15) s'appliquant sur la seconde zone partielle (11) soit inférieur au premier débit volumétrique partiel (14).

3. Circuit de refroidissement (1) selon l'une quelconque des revendications précédentes, dans lequel un entraînement du véhicule automobile (3) est effectué par le biais de la première puissance de propulsion et la seconde puissance de propulsion peut être fournie uniquement en cas de besoin en plus de la première puissance de propulsion.

4. Circuit de refroidissement (1) selon l'une quelconque des revendications précédentes, dans lequel seuls des composants (17) qui sont nécessaires pour le fonctionnement de la seconde machine électrique (6) sont disposés dans la seconde zone partielle (11).

5. Circuit de refroidissement (1) selon l'une quelconque des revendications précédentes, dans lequel un onduleur à modulation de largeur d'impulsion (18) est disposé dans chaque zone partielle (10, 11).

6. Circuit de refroidissement (1) selon la revendication 5, dans lequel l'onduleur à modulation de largeur d'impulsion (18) est disposé, dans au moins une des zones partielles (10, 11), en amont de la machine électrique (4, 6) disposée dans la zone partielle (10, 11).

7. Véhicule automobile (3), présentant au moins une chaîne cinématique (2), dans lequel la chaîne cinématique (2) présente au moins une première machine électrique (4) destinée à fournir une première puissance de propulsion pour un premier essieu (5) du véhicule automobile (3) et au moins une seconde machine électrique (6) destinée à fournir une seconde puissance de propulsion pour un second essieu (7) du véhicule automobile (3) ; les deux machines électriques (4, 6) étant disposées dans un circuit de refroidissement (1) selon l'une quelconque des revendications précédentes.
